# FASCICULE DE BREVET EUROPEEN

(11) **EP 2 989 618 B1**
(45) Date de publication et mention de la délivrance du brevet: **19.05.2021**
(21) Numéro de dépôt: 14719008.6
(22) Date de dépôt: 23.04.2014
(51) Int. Cl.: G08B 5/00, G06K 9/00, G06T 7/40, H04N 9/68, H04N 9/64

(54) **PROCÉDÉ D'AIDE À LA RECHERCHE D'UN ÉLÉMENT, DISPOSITIF ET VÉHICULE ASSOCIÉS**
VERFAHREN ZUR UNTERSTÜTZUNG DER SUCHE NACH EINEM ELEMENT UND ZUGEHÖRIGE VORRICHTUNG UND FAHRZEUG
METHOD FOR ASSISTING WITH THE SEARCH FOR AN ELEMENT, AND ASSOCIATED DEVICE AND VEHICLE

(30) Priorité: 26.04.2013 FR 1300982
(43) Date de publication de la demande: 02.03.2016
(73) Titulaire: Thales, 92200 Neuilly Sur Seine (FR)
(72) Inventeur: LE MEUR, Alain, 78995 Elancourt Cedex (FR); KOCH, Olivier, 78995 Elancourt Cedex (FR)
(74) Mandataire: Lavoix
(86) Numéro de dépôt international: PCT/EP2014/058271
(87) Numéro de publication internationale: WO 2014/173972

(56) Documents cités:
- US-A1- 2006 225 335
- US-A1- 2008 252 794
- CHENG H D ET AL: "Color image segmentation: advances and prospects", PATTERN RECOGNITION, ELSEVIER, GB, vol. 34, no. 12, 1 décembre 2001 (2001-12-01), pages 2259-2281, XP004508355, ISSN: 0031-3203, DOI: 10.1016/S0031-3203(00)00149-7
- Gary Mortimer: "Automated Life Jacket Detection enhances Search and Rescue Operations", , 20 février 2011 (2011-02-20), XP055101011, Extrait de l'Internet: URL:http://www.suasnews.com/2011/02/3861/a utomated-life-jacket-detection-enhances-se arch-and-rescue-operations/ [extrait le 2014-02-07]
- Man-Woo Park: "AUTOMATED 3D VISION-BASED TRACKING OF CONSTRUCTION ENTITIES", , 1 December 2012 (2012-12-01), XP055470569, Retrieved from the Internet: URL:https://pdfs.semanticscholar.org/5b1f/ 7cebaa471d26b62eb737cd6b8e101260fa20.pdf [retrieved on 2018-04-25]

## Description

La présente invention concerne un procédé d'aide à la recherche d'un élément dans un environnement. La présente invention concerne également un dispositif d'aide à la recherche d'un élément dans un environnement et un véhicule comportant un tel dispositif.

L'invention s'applique notamment au domaine des avions de patrouille maritime ayant pour mission de rechercher et d'aider les naufragés.

Pour réaliser une telle mission, les avions de patrouille maritime sont généralement équipés d'une caméra montée sur une structure motorisée dont il est possible de diriger la ligne de visée. Ceci permet de réaliser des balayages d'une zone, notamment de larges étendues d'eau, à la recherche de personnes, d'embarcations de survie ou de fumées de détresse. Les images prises par la caméra sont affichées à un opérateur qui est chargé de détecter les personnes à secourir. Pour cette détection, l'opérateur utilise le fait que les matériels de survie ont généralement une teinte contrastant fortement avec la teinte de l'environnement. Par exemple, un gilet de sauvetage est usuellement de teinte jaune, orange ou rouge tandis que la mer est un milieu naturel de teinte bleu-vert.

Toutefois, malgré le fort contraste de teinte entre le matériel de survie et l'environnement, le naufragé ou le matériel de survie ne représente que quelques pixels sur l'image affichée à l'opérateur lorsque la distance entre l'avion de patrouille et le naufragé est importante. En outre, les conditions d'éclairage, une luminosité faible ou une lumière ambiante gênante, rendent également difficile la détection du naufragé ou du matériel de survie. Ainsi, la probabilité de détection du naufragé ou du matériel de survie par l'opérateur est alors faible, ce qui diminue la probabilité de secourir le naufragé à temps.

Il existe donc un besoin pour un procédé d'aide à la recherche qui permette une meilleure détection de la ou des personnes à secourir dans l'environnement
Gary Mortimer: "Automated Life Jacket Détection enhances Search and Rescue Opérations", 20 février 2011, divulgue un procédé d'aide à la recherche d'un élément indiquant la présence d'une personne à secourir dans un environnement maritime, mais ne divulgue pas l'expression de teinte, la selection de pixels, et la mise en évidence des pixels selon la présente invention.

La présente invention concerne un procédé d'aide à la recherche selon les revendications 1-7.

L'invention concerne aussi un dispositif selon la revendication 8.

L'invention se rapporte, également, à un véhicule selon la revendication 9.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un aéronef selon l'invention,
- figure 2, un ordinogramme d'un exemple de mise en œuvre d'un procédé d'aide à la recherche selon l'invention, et
- figure 3, une représentation d'une roue chromatique.

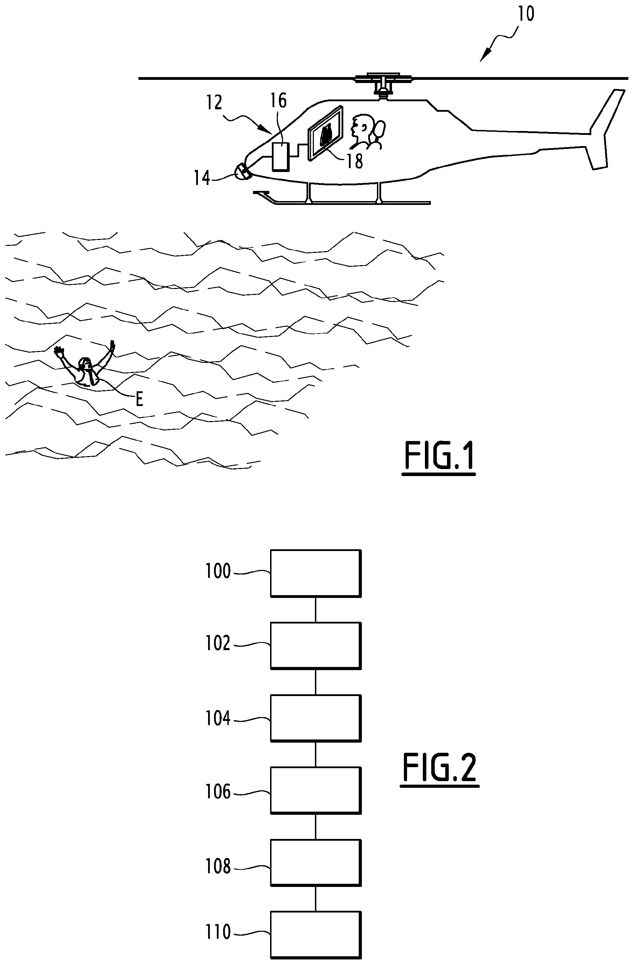

Un aéronef 10 est représenté sur la figure 1. L'aéronef 10 de la figure 1 est un hélicoptère. Un aéronef 10 est tout engin volant comme un avion, un drone ou un satellite.

L'aéronef 10 comporte un dispositif 12 d'aide à la recherche d'un élément E dans un environnement. Le dispositif 12 est propre à aider un opérateur pour la recherche de l'élément E dans l'environnement.

L'élément E présente une teinte prédéfinie. Par exemple, si l'élément E est un gilet de sauvetage et l'environnement est la mer, l'élément E présente une teinte orange.

L'élément E indique, en outre, la présence d'au moins une personne à secourir dans l'environnement.

L'élément E est, selon l'exemple de la figure 1, un gilet de teinte orange.

En variante, l'élément E est une embarcation de survie, une combinaison de survie, une bouée de sauvetage, un navire de secours ou des fumées de détresse. Les teintes de ces éléments sont usuellement le jaune, l'orange ou le rouge.

Le dispositif 12 d'aide à la recherche comporte une caméra 14, un calculateur 16 et un dispositif d'affichage 18.

La caméra 14 est adaptée à la prise d'images en couleurs. La caméra 14 est propre à capter un ensemble d'images à une cadence faible de manière à obtenir une série d'images fixes comme avec un appareil photo ou à une cadence plus importante de manière à acquérir assez d'images pour former un flux vidéo.

Par exemple, la caméra 14 est propre à fournir un flux vidéo, par exemple, en format vidéo HD-SDI. L'acronyme HD renvoie à la haute définition. La HD-SDI (High Definition - Serial digital interface) ou interface numérique série haute définition est un protocole de transport ou de diffusion des différents formats de vidéo numériques. Le protocole HD-SDI est défini par la norme ANSI/SMPTE 292M. Le protocole HD-SDI est particulièrement adapté pour un traitement en temps réel d'images.

Le calculateur 16 est propre à collecter les images issues de la caméra 14 ainsi qu'à traiter les images pour obtenir des images modifiées.

Le dispositif d'affichage 18 est, selon l'exemple de la figure 1, un écran propre à afficher des images opérateur, par exemple les images de la caméra 14 ou les images modifiées par le calculateur 16.

Le fonctionnement du dispositif 12 va maintenant être décrit en référence à la mise en œuvre par le calculateur 16 d'un procédé d'aide à la recherche de l'élément E dans un environnement. Une telle mise en œuvre est illustrée par l'ordinogramme de la figure 2.

Le procédé comprend une étape 100 de fourniture d'au moins une image en couleur.

Pour simplifier, il est supposé qu'à cette étape de fourniture 100, une seule image I1 en couleur est fournie. Le raisonnement est évidemment le même si un flux vidéo comprenant un ensemble d'images est considéré.

L'étape de fourniture 100 est, par exemple, mise en œuvre par la caméra 14.

L'image I1 est un ensemble de pixels. Un pixel, souvent abrégé px ou p, est l'unité de base permettant de mesurer la définition d'une image. Son nom provient de la locution anglaise « *picture element* », qui signifie « *élément d'image ».*

Le procédé comporte une étape 102 d'expression de la teinte d'au moins une partie des pixels de l'image I1 dans un système colorimétrique S particulier.

Une teinte est la forme pure d'une couleur, c'est-à-dire sans adjonction de blanc ou de noir qui permettent d'obtenir ses nuances. La teinte est maintenant employée par les coloristes pour désigner un ton, c'est-à-dire la couleur composée d'une certaine quantité des trois couleurs primaires, sans tenir compte de la clarté ni de la saturation.

Le système colorimétrique S est défini par l'existence d'une bijection continue f depuis l'ensemble des teintes du spectre visible vers l'ensemble des valeurs d'un paramètre P, la bijection f associant une teinte à une valeur du paramètre P. Ainsi, chaque teinte du spectre lumineux est représentée par une seule valeur d'un paramètre unique noté P. Le spectre lumineux est l'ensemble des teintes visibles, c'est-à-dire des teintes correspondant à une longueur d'onde comprise entre 400 nanomètres (nm) et 800 nm. L'image par la bijection f de l'ensemble des teintes du spectre visible est un ensemble continu de valeurs du paramètre P. Cet ensemble de valeurs présente une étendue totale notée E_{TOTALE.}

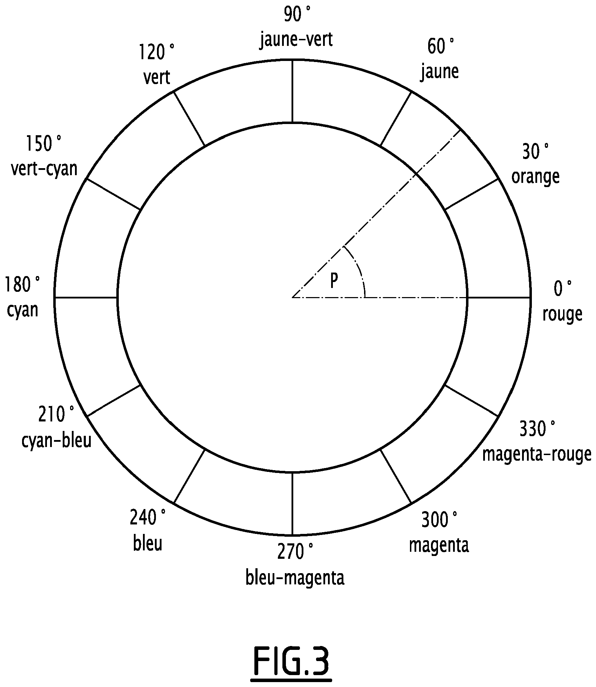

Par exemple, le système colorimétrique S est représentable sous la forme d'une roue chromatique telle qu'illustrée par la figure 3. La roue chromatique est une représentation conventionnelle circulaire des teintes ordonnées comme au sein d'un arc-en-ciel, la fermeture du cercle s'effectuant par une transition du magenta au jaune via le rouge. Généralement, l'orientation des couleurs se fait dans le sens direct (rouge, puis jaune, puis vert, etc...). Ainsi, la fonction f est alors la fonction qui associe à chaque teinte du visible son angle P sur la roue chromatique par rapport à une référence choisie. Généralement, il est choisi que le rouge correspond à l'angle nul. Dans ce cas, les teintes représentées tous les 30° en parcourant la roue chromatique dans le sens direct sont : le rouge à 0°, l'orange à 30°, le jaune à 60°, le jaune-vert à 90°, le vert à 120°, le vert-cyan à 150°, le cyan à 180°, le cyan-bleu à 210°, le bleu à 240°, le bleu-magenta à 270°, le magenta à 300° et le magenta-rouge à 330°. Ces différentes teintes sont indiquées sur la roue chromatique de la figure 3.

Dans le cas de la roue chromatique, l'étendue totale E_{TOTALE} correspond à 360°. En outre, la valeur du paramètre P associée à la teinte prédéfinie de l'élément E par la fonction f est notée P_{prédéfinie} et vaut 30° pour le gilet orange.

En variante, au lieu de représenter les teintes sous forme de la roue chromatique précédente, une bande rectiligne est utilisée.

L'étape 102 d'expression est, selon l'ordinogramme de la figure 2, mise en œuvre par conversion de l'image I1 dans une base colorimétrique TSL.

L'acronyme TSL fait référence aux termes Teinte, Saturation, Luminosité. Les abréviations anglaises HLS pour « Hue, Saturation, Lightness » sont parfois utilisées. La saturation fournit une mesure de l'intensité de la couleur identifiée par sa teinte. La luminosité correspond à une mesure de la quantité de lumière. Il s'agit d'un modèle colorimétrique. Il permet de décrire les couleurs distinguées par la vision humaine à travers l'interaction de ces trois composantes théoriques. En ce sens, un tel modèle est un modèle perceptuel.

L'étape 102 d'expression est mise en œuvre à l'aide du calculateur 16.

Le procédé comprend une étape 104 de sélection dans l'image I1 de l'ensemble de pixels ayant une teinte dont la valeur du paramètre P associée par la bijection f est comprise entre deux valeurs choisies, une première valeur Pmin et une deuxième valeur Pmax.

Les deux valeurs choisies Pmin et Pmax sont telles que l'ensemble des teintes dont la valeur du paramètre P associée par la bijection f est comprise entre les deux valeurs choisies Pmin et Pmax comprennent la teinte prédéfinie.

Selon un mode de réalisation préféré, l'opérateur choisit les première et deuxième valeurs Pmin et Pmax.

Le choix de l'opérateur prend en compte les teintes qui lui semblent adaptées pour sa recherche.

Le plus usuellement, les teintes prises en compte sont les teintes possibles de l'élément E. Par exemple, à l'étape 104 de sélection, tous les pixels de l'image I1, ayant une teinte comprise entre -20° et 80° sont sélectionnés, -20° correspond à un rouge nuance magenta tandis que 80° correspond à un jaune nuancé vert.

Selon un autre exemple, si l'opérateur cherche à détecter une voiture bleue sur un fond de sable, il choisira plutôt une valeur de 210° pour la première valeur Pmin et 270° pour la deuxième valeur Pmax.

L'opérateur peut également considérer d'autres éléments pour choisir les première et deuxième valeurs Pmin et Pmax.

Par exemple, les conditions météorologiques de l'environnement influent sur la teinte perçue pour l'élément E. Typiquement, au moment du coucher de soleil, les teintes rouges sont supprimées.

L'étape 104 de sélection est mise en œuvre par le calculateur 16.

Le procédé comprend ensuite une étape 106 de mise en évidence des pixels sélectionnés.

Une telle étape 106 comprend la modification de l'image I1 dans la base colorimétrique TSL pour obtenir une image I1 modifiée notée I2 dans la suite.

Par exemple, les paramètres de saturation et de luminance des pixels sélectionnés sont mis à une valeur supérieure à 75%, et ce indépendamment de leur valeur initiale. Le pixel ainsi modifié a alors une couleur plus pure avec une apparence claire.

De préférence, les paramètres de saturation et de luminance sont mis à la valeur maximale.

Le procédé comporte également une étape 108 de conversion de l'image modifiée I2 depuis la base colorimétrique TSL dans un format d'affichage adapté pour le dispositif d'affichage 18.

L'étape 108 de conversion est mise en œuvre à l'aide du calculateur 16.

Le procédé comporte une étape 110 d'affichage de l'image modifiée I2 modifiée sur le dispositif d'affichage 18.

L'intérêt du système colorimétrique S pour cette invention est que les teintes usuellement utilisées pour les matériels de survie (rouge, orange, jaune) sont représentées par des valeurs continues d'angles sur la roue chromatique. Ainsi toutes les teintes usuelles des matériels de survie se trouvent entre les angles -20° (magenta-rouge) et +80° (jaune-vert) en passant par toutes les nuances du rouge (autour de 0°), toutes les nuances de l'orange (autour de 30°) et toutes les nuances du jaune (autour de 60°). On peut donc en sélectionnant deux bornes de teinte (une borne minimum -20° et une borne maximum +80°) filtrer tous les pixels dont les teintes correspondent à celles des matériels usuels de survie. Le choix d'un tel type de système colorimétrique S permet la réalisation d'un traitement simple de filtrage par le calculateur 16.

Dans l'aéronef 10, l'opérateur est donc face à une image I2 dans laquelle des pixels sélectionnés sur un critère de teinte sont mis en évidence par augmentation des paramètres de saturation et de luminosité. Ainsi, pour l'élément E dont la teinte est standardisée, il devient possible de le repérer beaucoup plus facilement dans l'environnement.

En effet, même si l'image modifiée I2 correspond à la vision de la caméra 14 à très longue distance, soit l'élément E a une étendue sur l'image de quelques pixels, la mise en évidence rend l'élément E détectable par l'opérateur avec de meilleure chance de succès.

Le procédé permet donc bien d'obtenir une meilleure détection de l'élément E dans un environnement.

De manière alternative, l'étape 106 de mise en évidence comprend la modification de la teinte des pixels sélectionnés de l'image I1 au lieu de changer les paramètres de saturation et de luminance.

A titre d'exemple, les pixels sélectionnés seront teintés en jaune clair.

Selon une autre variante, les pixels sélectionnés sont mis en évidence par un clignotement entre deux séries d'images distinctes par exemple à 1Hz dans lesquelles les pixels apparaissent différemment. Par exemple, dans une série d'images, les pixels sélectionnés apparaissent en noir pendant une seconde alors que, dans la série d'images suivantes,, les pixels sélectionnés apparaissent en jaune clair pendant une seconde. Utiliser un clignotement perceptible par l'œil humain est avantageux dans la mesure où le cerveau humain de l'opérateur est très adapté à détecter les modifications d'une image même mineure.

Selon une autre variante, les pixels sélectionnés sont mis en évidence par l'ajout d'une symbolique particulière. Par exemple, dans une image, les pixels sélectionnés sont entourés par un rectangle de couleur blanche.

Selon une autre variante, les pixels sélectionnés sont mis en évidence par un agrandissement de la zone où ceux-ci se trouvent.

L'invention trouve notamment son application dans la recherche en mer car l'environnement est d'une couleur fixe, à savoir une teinte tirant sur le bleu contrastant fortement avec des gilets de sauvetage notamment dans les teintes entre le rouge et le jaune en passant par l'orange.

Selon une variante, la détection est automatique. Dans ce cas, l'étape 106 de modification, l'étape 108 de conversion et l'étape 110 d'affichage ne sont pas mises en œuvre.

Selon une autre variante, l'étape 104 de sélection se fait sur plusieurs zones d'intérêt disjointes sélectionnées par l'opérateur. Dans ce cas, l'étape 104 de sélection des pixels est mise en œuvre par sélection des pixels ayant une teinte dont la valeur du paramètre P associée par la bijection f est comprise dans au moins un ensemble d'une pluralité d'ensembles, les ensembles étant choisis pour que les ensembles soient disjoints et que chaque valeur appartenant à l'un des ensembles soit comprise entre la première et la deuxième valeurs Pmin, Pmax.

## Revendications

1. Procédé d'aide à la recherche d'un élément (E) ayant une teinte prédéfinie dans un environnement, l'élément (E) indiquant la présence d'au moins une personne à secourir dans l'environnement, le procédé comprenant :
- la fourniture d'au moins une image (I1) en couleur, la ou chaque image (I) comportant des pixels,
- l'expression de la teinte d'au moins une partie des pixels de la ou chaque image (I1) dans un système colorimétrique (S), le système colorimétrique (S) étant défini par l'existence d'une bijection continue (f) depuis l'ensemble des teintes du spectre visible vers l'ensemble des valeurs d'un paramètre (P), la bijection (f) associant une teinte à une valeur du paramètre (P) et l'ensemble des valeurs du paramètre (P) ayant une étendue totale (E_{TOTALE}),
- la sélection dans la ou chaque image (I1) des pixels ayant une teinte dont la valeur du paramètre (P) associée par la bijection (f) est comprise entre une première et une deuxième valeurs (Pmin, Pmax), les première et deuxième valeurs (Pmin, Pmax) étant choisies pour que l'ensemble des teintes, dont la valeur du paramètre (P) associée par la bijection (f) est comprise entre les deux valeurs choisies (Pmin, Pmax), comprenne la teinte prédéfinie, les première et deuxième valeurs (Pmin, Pmax) étant choisies par un opérateur, et
- la mise en évidence des pixels sélectionnés, la mise en évidence des pixels sélectionnés comprenant la mise des paramètres de saturation et de luminance des pixels sélectionnés à une valeur supérieure à 75% de la valeur maximale.

2. Procédé selon la revendication 1, dans lequel l'expression de la teinte d'au moins une partie des pixels de la ou chaque image (I1) dans le système colométrique est mise en œuvre par conversion de la ou chaque image (I1) dans au moins une partie de la base colorimétrique TSL.

3. Procédé selon la revendication 1 ou 2, dans lequel la mise en évidence des pixels sélectionnés comprend la modification de la teinte des pixels sélectionnés et/ou l'introduction d'un clignotement entre deux images différentes.

4. Procédé selon l'une quelconque des revendications 1 à 3, dans lequel la sélection des pixels est mise en œuvre par sélection des pixels ayant une teinte dont la valeur du paramètre (P) associée par la bijection (f) est comprise dans au moins un ensemble d'une pluralité d'ensembles, les ensembles étant choisis pour que les ensembles soient disjoints et que chaque valeur appartenant à l'un des ensembles soit comprise entre la première et la deuxième valeurs (Pmin, Pmax).

5. Procédé selon l'une quelconque des revendications 1 à 4, dans lequel la fourniture d'au moins une image en couleur (I1) est mise en œuvre par acquisition d'un flux vidéo.

6. Procédé selon l'une quelconque des revendications 1 à 5, dans lequel l'environnement est la mer et l'élément (E) est choisi dans un groupe constitué de :
- un gilet de sauvetage,
- des fumées de détresse,
- une embarcation de survie,
- une combinaison de survie,
- une bouée de sauvetage, et
- un navire de secours.

7. Procédé selon l'une quelconque des revendications 1 à 6, dans lequel les deux valeurs choisies (Pmin, Pmax) prennent en compte les conditions météorologiques de l'environnement.

8. Dispositif (12) d'aide à la recherche d'un élément (E) ayant une teinte prédéfinie dans un environnement, l'élément (E) Indiquant la présence d'au moins une personne à secourir dans l'environnement, le dispositif (12) comprenant :
- une caméra (14) adaptée pour la prise d'au moins une image (I1) en couleur, l'image ou chaque image (I1) comportant un ensemble de pixels,
- un calculateur (16) adapté pour la mise en œuvre des étapes suivantes :
• l'expression de la teinte d'au moins une partie des pixels de la ou chaque image (I1) dans un système colorimétrique (S), le système colorimétrique (S) étant défini par l'existence d'une bijection continue (f) depuis l'ensemble des teintes du spectre visible vers l'ensemble des valeurs d'un paramètre (P), la bijection (f) associant une teinte à une valeur du paramètre (P) et l'ensemble des valeurs du paramètre (P) ayant une étendue totale (E_{TOTALE}), et
• la sélection dans la ou chaque image (I1) d'un ensemble de pixels ayant une teinte dont la valeur du paramètre (P) associée par la bijection (f) est comprise entre deux valeurs choisies (Pmin, Pmax), les deux valeurs choisies (Pmin, Pmax) étant telles que l'ensemble des teintes, dont la valeur du paramètre (P) associée par la bijection (f) est comprise entre les deux valeurs choisies (Pmin, Pmax), comprennent la teinte prédéfinie, les première et deuxième valeurs (Pmin, Pmax) étant choisies par un opérateur, et
• la mise en évidence des pixels sélectionnés, la mise en évidence des pixels sélectionnés comprenant la mise des paramètres de saturation et de luminance des pixels sélectionnés à une valeur supérieure à 75% de la valeur maximale.

9. Véhicule (10) comportant le dispositif (12) selon la revendication 8.

## Patentansprüche

1. Verfahren zum Unterstützen der Suche nach einem Element (E) mit einem vordefinierten Farbton in einer Umgebung, wobei das Element (E) die Anwesenheit von mindestens einer zu rettenden Person in der Umgebung anzeigt, wobei das Verfahren aufweist:
- Bereitstellen mindestens eines Bildes (I1) in Farbe, wobei das oder jedes Bild (I) Pixel aufweist,
- Ausdrücken des Farbtons von mindestens einem Teil der Pixel des oder jedes Bildes (I1) in einem kolorimetrischen System (S), wobei das kolorimetrische System (S) durch das Vorhandensein einer kontinuierlichen Bijektion (f) von der Menge der Farbtöne des sichtbaren Spektrums zu der Menge der Werte eines Parameters (P) definiert wird, wobei die Bijektion (f) einen Farbton mit einem Wert des Parameters (P) assoziiert und die Menge der Werte des Parameters (P) eine Gesamtausdehnung (E_{TOTALE}) hat,
- Auswählen in dem oder jedem Bild (I1) der Pixel mit einem Farbton, dessen Wert des Parameters (P), der durch die Bijektion (f) assoziiert wird, zwischen einem ersten und einem zweiten Wert (Pmin, Pmax) beträgt, wobei der erste und der zweite Wert (Pmin, Pmax) derart ausgewählt werden, dass die Menge der Farbtöne, deren Wert des Parameters (P), der durch die Bijektion (f) assoziiert wird, zwischen den beiden ausgewählten Werten (Pmin, Pmax) liegt, den vordefinierten Farbton aufweist, wobei der erste und der zweite Wert (Pmin, Pmax) von einer Bedienperson gewählt werden, und
- Hervorheben der ausgewählten Pixel, wobei das Hervorheben der ausgewählten Pixel das Einstellen der Sättigungs- und Luminanzparameter der ausgewählten Pixel auf einen Wert größer als 75 % des Maximalwertes aufweist.

2. Verfahren gemäß Anspruch 1, wobei das Ausdrücken des Farbtons von mindestens einem Teil der Pixel des oder jedes Bildes (I1) im kolorimetrischen System durch Umwandeln des oder jedes Bildes (I1) in mindestens einen Teil der kolorimetrischen Basis TSL erfolgt.

3. Verfahren gemäß Anspruch 1 oder 2, wobei das Hervorheben der ausgewählten Pixel das Modifizieren des Farbtons der ausgewählten Pixel und/oder das Einführen eines Blinkens zwischen zwei verschiedenen Bildern aufweist.

4. Verfahren gemäß irgendeinem der Ansprüche 1 bis 3, wobei das Auswählen der Pixel durch Auswählen der Pixel mit einem Farbton erfolgt, dessen Wert des Parameters (P), der durch die Bijektion (f) assoziiert wird, in mindestens einer Menge einer Mehrzahl von Mengen enthalten ist, wobei die Mengen derart ausgewählt werden, dass die Mengen disjunkt sind und jeder Wert, der zu einer der Mengen gehört, zwischen dem ersten und dem zweiten Wert (Pmin, Pmax) liegt.

5. Verfahren gemäß irgendeinem der Ansprüche 1 bis 4, wobei das Bereitstellen mindestens eines Bildes in Farbe (I1) durch Erfassen eines Videostroms erfolgt.

6. Verfahren gemäß irgendeinem der Ansprüche 1 bis 5, wobei die Umgebung das Meer ist und das Element (E) aus einer Gruppe ausgewählt wird, bestehend aus:
- einer Schwimmweste,
- Notrauch,
- einem Rettungsboot,
- einem Überlebensanzug,
- einem Rettungsreifen und
- einem Rettungsschiff.

7. Verfahren gemäß irgendeinem der Ansprüche 1 bis 6, wobei die beiden ausgewählten Werte (Pmin, Pmax) die meteorologischen Bedingungen der Umgebung berücksichtigen.

8. Vorrichtung (12) zum Unterstützen der Suche nach einem Element (E) mit einem vordefinierten Farbton in einer Umgebung,
wobei das Element (E) die Anwesenheit von mindestens einer zu rettenden Person in der Umgebung anzeigt, wobei die Vorrichtung (12) aufweist:
- eine Kamera (14), die zum Aufnehmen mindestens eines Bildes (I1) in Farbe angepasst ist, wobei das Bild oder jedes Bild (I1) eine Mehrzahl von Pixeln aufweist,
- einen Rechner (16), der zum Durchführen der folgenden Schritte angepasst ist:
• Ausdrücken des Farbtons von zumindest einem Teil der Pixel des oder jedes Bildes (I1) in einem kolorimetrischen System (S), wobei das kolorimetrische System (S) durch das Vorhandensein einer kontinuierlichen Bijektion (f) von der Menge der Farbtöne des sichtbaren Spektrums zu der Menge der Werte eines Parameters (P) definiert ist, wobei die Bijektion (f) einen Farbton mit einem Wert des Parameters (P) assoziiert und die Menge der Werte des Parameters (P) eine Gesamtausdehnung (E_{TOTALE}) hat, und
• Auswählen in dem oder jedem Bild (I1) einer Menge von Pixeln mit einem Farbton, dessen Wert des Parameters (P), der durch die Bijektion (f) assoziiert ist, zwischen zwei ausgewählten Werten (Pmin, Pmax) liegt, wobei die beiden ausgewählten Werte (Pmin, Pmax) derart sind, dass die Menge der Farbtöne, deren Wert des Parameters (P), der durch die Bijektion (f) assoziiert ist, zwischen den beiden ausgewählten Werten (Pmin, Pmax) liegt, den vordefinierten Farbton aufweist, wobei der erste und der zweite Wert (Pmin, Pmax) von einer Bedienperson ausgewählt werden, und
• Hervorheben der ausgewählten Pixel, wobei das Hervorheben der ausgewählten Pixel das Einstellen der Sättigungs- und Luminanzparameter der ausgewählten Pixel auf einen Wert größer als 75 % des Maximalwertes aufweist.

9. Fahrzeug (10), aufweisend die Vorrichtung (12) gemäß Anspruch 8.

## Claims

1. A method for assisting with the search for an element (E) having a predefined hue in an environment, the element (E) indicating the presence of at least one person to be rescued in the environment, the method comprising:
- providing at least one image (I1) in color, said or each image (I) comprising pixels,
- expressing the hue of at least one portion of the pixels of said or each image (I1) in a colorimetric system (S), the colorimetric system (S) being defined by the existence of a continuous bijection (f) from the set of hues of the visible spectrum to the set of values of a parameter (P), the bijection (f) associating a hue with a value of the parameter (P) and the set of values of the parameter (P) having a total extent (E_{TOTAL}),
- selecting in said or each image (I1) pixels having a hue for which the value of the parameter (P) associated by the bijection (f) is comprised between a first and a second values (Pmin, Pmax), the first and second values (Pmin, Pmax) being chosen so that the set of hues, for which the value of the parameter (P) associated by the bijection (f) is comprised between both chosen values (Pmin, Pmax), comprises the predefined hue, the first and second values (Pmin, Pmax) being chosen by an operator, and
- highlighting the selected pixels, the highlighting of the selected pixels comprising the setting of the saturation and luminance parameters of the selected pixels to a value greater than 75% of the maximum value.

2. The method according to claim 1, wherein the expression of the hue of at least one portion of the pixels of said or each image (I1) in the colorimetric system is implemented by converting said or each image (I1) into at least one portion of the colorimetric basis TSL.

3. The method according to claim 1 or 2, wherein the highlighting of the selected pixels comprises the modification of the hue of the selected pixels and/or the introduction of blinking between two different images.

4. The method according to any one of claims 1 to 3, wherein the selection of the pixels is implemented by selecting pixels having a hue for which the value of the parameter (P) associated through the bijection (f) is comprised in at least one set of a plurality of sets, the sets being chosen so that the sets are disjoint and so that each value belonging to one of the sets is comprised between the first and the second values (Pmin, Pmax).

5. The method according to any one of claims 1 to 4, wherein providing at least one image in color (I1) is implemented by acquiring a video stream.

6. The method according to any one of claims 1 to 5, wherein the environment is the sea and the element (E) is selected from a group consisting of:
- a life jacket,
- distress smoke,
- a life boat,
- a survival suit,
- a life buoy, and
- a rescue ship.

7. The method according to any one of claims 1 to 6, wherein both chosen values (Pmin, Pmax) take into account the weather conditions of the environment.

8. A device (12) for assisting with the search for an element (E) having a predefined hue in an environment, the element (E) indicating the presence of at least one person to be rescued in the environment, the device (12) comprising:
- a camera (14) suitable for taking at least one image (I1) in color, the image or each image (I1) comprising a set of pixels,
- a calculator (16) suitable for implementing the following steps:
• expressing the hue of at least one portion of the pixels of said or each image (I1) in a colorimetric system (S), the colorimetric system (S) being defined by the existence of a continuous bijection (f) from the set of hues of the visible spectrum to the set of values of a parameter (P), the bijection (f) associating a hue with a value of the parameter (P) and the set of values of the parameter (P) having a total extent (E_{TOTAL}),
• selecting in said or each image (I1) pixels having a hue for which the value of the parameter (P) associated by the bijection (f) is comprised between a first and a second values (Pmin, Pmax), the first and second values (Pmin, Pmax) being chosen so that the set of hues, for which the value of the parameter (P) associated by the bijection (f) is comprised between both chosen values (Pmin, Pmax), comprises the predefined hue, the first and second values (Pmin, Pmax) being chosen by an operator, and
• highlighting the selected pixels, the highlighting of the selected pixels comprising the setting of the saturation and luminance parameters of the selected pixels to a value greater than 75% of the maximum value.

9. A vehicle (10) comprising the device (12) according to claim 8.
